# EUROPÄISCHE PATENTSCHRIFT

(11) **EP 1 839 616 B1**
(45) Veröffentlichungstag und Bekanntmachung des Hinweises auf die Patenterteilung: **05.11.2014**
(21) Anmeldenummer: 07004438.3
(22) Anmeldetag: 05.03.2007
(51) Int. Cl.: A61C 7/10

(54) **orthodontische Vorrichtung**
Orthodontic device
Dispositif orthodontique

(30) Priorität: 01.04.2006 DE 102006015290
(43) Veröffentlichungstag der Anmeldung: 03.10.2007
(73) Patentinhaber: Weissbach Otte, Klaus, 69469 Weinheim (DE)
(72) Erfinder: Weissbach Otte, Klaus, 69469 Weinheim (DE)
(74) Vertreter: Grommes, Karl F.

(56) Entgegenhaltungen:
- WO-A-02/26155
- WO-A-2004/103200
- DE-A1- 1 566 260
- DE-A1- 19 953 827
- DE-U1- 29 613 253
- US-A- 4 379 693
- US-A- 5 439 377
- US-A1- 2003 091 952

## Beschreibung

### Technisches Gebiet

Die Erfindung betrifft eine orthodontische Vorrichtung zur Distalisation von gegenüberliegenden Seitenzähnen des Oberkiefers eines Patienten.

### Stand der Technik

Zur Zahnregulierung der Seitenzähne ist es bekannt, eine orthodontische Vorrichtung zu verwenden, die auch als Distalisierungs-Apparatur oder Pendulum-Apparatur bezeichnet wird. Dabei erfolgt in der Regel eine Rückbewegung (Distalisation) der Molaren (Backenzähne) im Oberkiefer.

Es sind Vorrichtungen bekannt mit einer an dem Gaumen des Patienten anliegenden Abstützplatte, welche über seitlich an der Abstützplatte angeordnete Drahtelemente an gegenüberliegenden Zähnen (in der Regel den Prämolaren) befestigbar ist. Um die gewünschte Distalisation der beiden Molaren des Oberkiefers zu bewirken, ist es weiterhin bekannt, dass mit der Abstützplatte zwei seitlich voneinander beabstandete und voneinander unabhängig einstellbare Kraftmodule verbunden sind, welche jeweils mit einem der beiden zu distalisierenden Seitenzähne verbindbar sind.

Eine orthodontische Vorrichtung mit den vorgenannten Merkmalen gibt das Dokument US-A-2003/0091952 an.

### Darstellung der Erfindung

Der Erfindung liegt die Aufgabe zugrunde, eine einfach aufgebaute und geometrisch kleine orthodontische Vorrichtung zur Distalisation der Seitenzähne des Oberkiefers anzugeben.

Diese Aufgabe wird erfindungsgemäß durch die Merkmale des Anspruchs 1 gelöst. Besonders vorteilhafte Ausgestaltungen der Erfindung nennen die Unteransprüche 2 bis 5. Alternative Lösungen geben die Nebenansprüche 6 und 7 an.

Bei einer ersten vorteilhaften Ausführungsform der Erfindung weist das jeweilige Kraftmodul der erfindungsgemäßen Vorrichtung eine in die Abstützplatte ein- und ausschraubbare Gewindestange sowie ein mit der Gewindestange axial verschiebbares, aber drehfreies Verbindungsteil auf. Das Verbindungsteil erstreckt sich dabei senkrecht zur Längsachse der Gewindestange, und an dem Verbindungsteil ist ein sich parallel zur Gewindesfange erstreckendes stangenförmiges Führungselement befestigt, welches einerseits in eine Führungsausnehmung der Abstützplatte verschiebbar eingreift und andererseits mit dem Endbereich des dem Kraftmodul zugeordneten elastischen Federarmes verbunden ist.

Das stangenförmige Führungselement kann aus einer zahnmedizinisch bekannten Legierungsart, beispielsweise Edelstahl bestehen, während der elastische Federarm vorzugsweise aus einer Titan-Molybdän-Legierung bestehen sollte, weil dieses Material besonders vorteilhafte elastische Eigenschaften besitzt.

Bei der Herstellung der mechanischen Verbindung zwischen dem aus der zuvor genannten Legierungsart Edelstahl bestehenden Führungselement und dem aus einer Titan-Molybdän-Legierung bestehenden Federarm sind die unterschiedlichen Eigenschaften der beiden Werkstoffe zu berücksichtigen. So verlieren Tifian-Molybdän-Legierungen bei stärkerer Erwärmung, wie sie beispielsweise beim Hartlöten auftreten, aufgrund von Gefügeveränderungen ihre Elastizität und damit ihre orthodontische Wirksamkeit. Außerdem kann das bereits bei niedrigen Temperaturen schmelzende Lot oftmals nicht biokompatibel sein und/oder toxische Substanzen enthalten.

Es hat sich daher als vorteilhaft erwiesen, das jeweilige Führungselement mit dem entsprechenden Federarm nicht durch Hartlöten zu verbinden, sondern alternativ durch eine Klebeverbindung oder durch eine Preß- bzw. Klemmpassung.

Um eine derartige Verbindung auf einfache Weise durchführen zu können, kann das stangenförmige Führungselement beispielsweise als Rohr ausgebildet sein, in welches der Endbereich des elastischen Federarmes hineinragt.

Vorteilhafterweise kann aber auch vorgesehen sein, daß der Endbereich des elastischen Federarmes selbst das stangenförmige Führungselement bildet, so daß ein separates Führungsrohr entfällt.

Bei einer weiteren Ausführungsform der Erfindung (vgl. Anspruch 6) ist das Verbindungsteil entlang eines sich parallel zur Gewindespindel erstreckenden stangenförmigen Führungselementes verschiebbar angeordnet, welches mit der Abstützplatte fest verbunden ist, wobei das Verbindungsteil mit dem Endbereich des dem Kraftmodul zugeordneten elastischen Federarmes verbunden ist.

Schließlich ist bei einer anderen Ausführungsform der Erfindung (vgl. Anspruch 7) vorgesehen, daß das jeweilige Kraftmodul eine an der Abstützplatte drehbar angeordnete Gewindespindel umfaßt, wobei die Gewindespindel mit einer Spindelmutter in Eingriff steht, an der der Endbereich des dem Kraftmodul zugeordneten elastischen Federarmes befestigt ist, und wobei die Spindelmutter entlang eines sich parallel zur Gewindespindel erstreckenden stangenförmigen Führungselementes verschiebbar angeordnet ist.

### Kurze Beschreibung der Zeichnung

Weitere Einzelheiten und Vorteile der Erfindung ergeben sich aus den folgenden anhand von Figuren erläuterten Ausführungsbeispielen. Es zeigen:
- Fig.1: eine Draufsicht auf eine an einem Zahnbogen eines Oberkiefers angeordnete erfindungsgemäße Vorrichtung mit zwei Kraftmodulen zur Distalisation der Molaren des Oberkiefers;
- Fig.2: eine teilweise als Schnitt dargestellte vergrößerte Ansicht eines der beiden in Fig.1 wiedergegebenen, aus Gewindestange, Verbindungsteil und Führungselement bestehenden Kraftmodule;
- Fig.3: eine teilweise als Schnitt dargestellte alternative Anordnung eines Führungselementes der erfindungsgemäßen Vorrichtung.

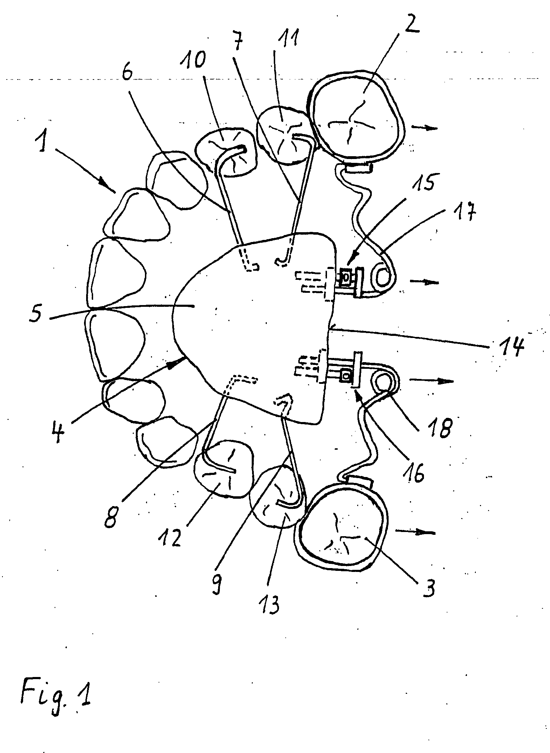

In Fig. 1 ist mit 1 der schematisch dargestellte Zahnbogen eines Oberkiefers bezeichnet.

Zur Distalisation der mit 2 und 3 bezeichneten Molaren ist eine erfindungsgemäße Vorrichtung 4 vorgesehen. Diese weist eine an dem Gaumen des Oberkiefers anliegende Abstützplatte 5 aus Kunststoff auf. Die Abstützplatte 5 ist mit Hilfe seitlich angeordneter Drahtelemente 6-9 an den vor den Molaren 2, 3 befindlichen Prämolaren 10-13 befestigt.

Auf der Rückseite 14 der Abstützplatte 5 sind mit dieser zwei seitlich voneinander beabstandete und unabhängig voneinander einstellbare Kraftmodule 15, 16 verbunden, welche jeweils über einen elastischen Federarm 17, 18 aus einer Titan-Molybdän-Legierung mit einem der beiden zu distalisierenden Molaren 2, 3 verbunden sind.

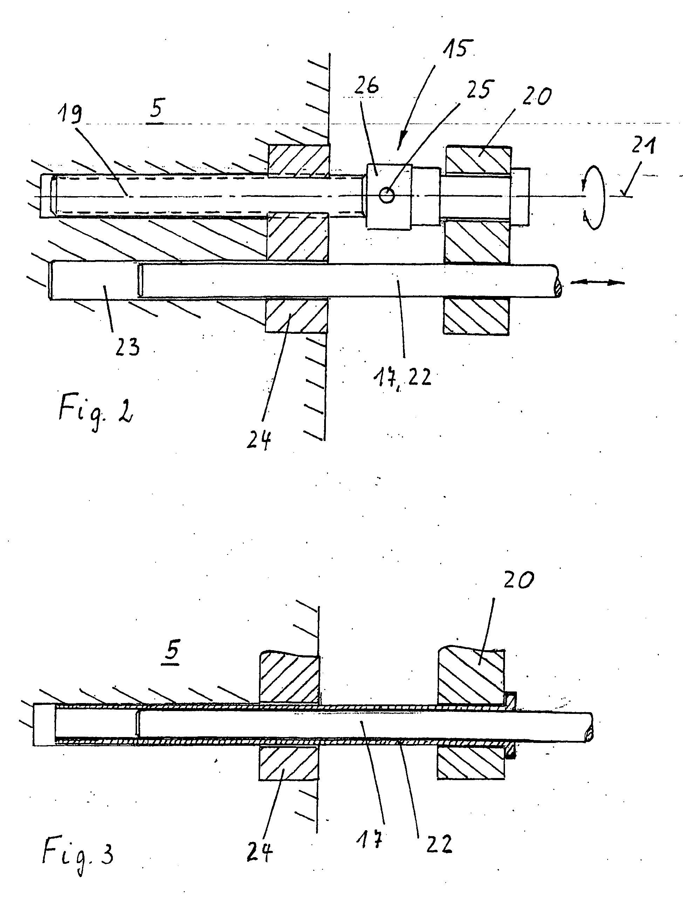

Das jeweilige Kraftmodul 15, 16 umfaßt eine in die Abstützplatte 5 ein- und ausschraubbare Gewindestange 19 (Fig.2), ein mit der Gewindestange 19 axial verschiebbares, aber drehfreies Verbindungsteil 20, welches sich senkrecht zur Längsachse 21 der Gewindestange 19 erstreckt, und ein an dem Verbindungsteil 20 z.B. durch eine Klebeverbindung befestigtes, sich parallel zur Längsachse 21 der Gewindestange 19 erstreckendes stangenförmiges Führungselement 22. Dabei handelt es sich bei dem dargestellten Ausführungsbeispiel bei dem Führungselement 22 um den der Abstützplatte 5 zugewandten Endbereich des elastischen Federarmes 17.

Das Führungselement 22 greift in eine Führungsausnehmung 23 der Abstützplatte 5 verschiebbar ein.

Um eine sichere Schraubverbindung zwischen der Gewindestange 19 und der Abstützplatte 5 zu erhalten, ist in die Abstützplatte 5 ein mit einem entsprechenden Gewinde versehenes Metallteil 24 eingelassen, welches außerdem eine Bohrung zur genauen seitlichen Führung des Führungselementes 22 enthält.

Außerdem ist zur manuellen Drehung der Gewindestange 19 ein mit einer oder mehreren Bohrung(en) 25 versehenes Betätigungsteil 26 vorgesehen, wobei in die senkrecht zur Längsachse 21 der Gewindestange 19 angeordneten Bohrung(en) 25 ein entsprechender Stift (nicht dargestellt) einführbar ist.

Wie Fig.1 unmittelbar entnehmbar ist, kann auf die beiden Molaren 2, 3, je nachdem, wie weit die Gewindestangen 19 aus der Abstützplatte 5 herausgedreht werden, ein unterschiedlicher Druck ausgeübt werden, so daß die Seitenzähne 2, 3 individuell zurückbewegt werden können (in Fig.1 sind die mit den Kraftmodulen 15, 16 erzeugten Rückstellkräfte durch Pfeile entsprechender Länge angedeutet).

In Fig.2 ist ein stangenförmiges Führungselement 22 dargestellt, welches aus einem Edelstahlrohr besteht, in dem der aus einer Titan-Molybdän-Legierung bestehende Endbereich des elastischen Federarmes 17 eingeführt ist. Die Verbindung zwischen Verbindungsteil 20, Führungselement 22 und Federarm 17 erfolgt in diesem Fall mittels einer Preßpassung.

Die Erfindung ist selbstverständlich nicht auf die vorstehend beschriebenen Ausführungsbeispiele beschränkt. So kann das Verbindungsteil beispielsweise auch entlang eines sich parallel zur Gewindespindel erstreckenden stangenförmigen Führungselementes verschiebbar angeordnet sein, welches mit der Abstützplatte verbunden ist. Das Verbindungsteil ist in diesem Fall mit dem Endbereich des dem Kraftmodul zugeordneten elastischen Federarmes kraftschlüssig verbunden.

Außerdem kann das jeweilige Kraftmodul eine an der Abstützplatte drehbar angeordnete Gewindespindel aufweisen, wobei der Gewindespindel eine Spindelmutter zugeordnet ist, an der der Endbereich des dem Kraftmodul zugeordneten elastischen Federarmes befestigt ist. Die Spindelmutter ist in diesem Fall entlang eines sich parallel zur Gewindespindel erstreckenden stangenförmigen Führungselementes verschiebbar angeordnet, welches mit der Abstützplatte verbunden ist.

### Bezugszeichenliste

- 1: Zahnbogen
- 2,3: Seitenzähne, Molare
- 4: Vorrichtung
- 5: Abstützplatte
- 6-9: Drahtelemente
- 10-13: Zähne, Prämolare
- 14: Rückseite
- 15,16: Kraftmodule
- 17,18: elastische Federarme
- 19: Gewindestange
- 20: Verbindungsteil
- 21: Längsachse
- 22: Führungselement
- 23: Führungsausnehmung
- 24: Metallteil
- 25: Bohrung
- 26: Betätigungsteil

## Patentansprüche

1. Orthodontische Vorrichtung zur Distalisation von gegenüberliegenden Seitenzähnen (2, 3) des Oberkiefers eines Patienten, wobei die Vorrichtung (4) eine bei ihrer bestimmungsgemäßen Verwendung an dem Gaumen des Patienten anliegende Abstützplatte (5) aufweist, welche über seitlich an der Abstützplatte (5) angeordnete Drahtelemente (6-9) an gegenüberliegenden Zähnen (10-13) befestigbar ist, welche sich vor den zu distalisierenden Seitenzähnen (2, 3) befinden, und wobei mit der Abstützplatte (5) zwei seitlich voneinander beabstandete und voneinander unabhängig einstellbare Kraftmodule (15, 16) verbunden sind, welche jeweils mit einem der beiden zu distalisierenden Seitenzähne (2, 3) verbindbar sind, **dadurch gekennzeichnet, daß** die Kraftmodule (15, 16) auf der Rückseite (14) der Abstützplatte (5) angeordnet sind und über elastische Federarme (17, 18) mit den zu distalisierenden Seitenzähne (2, 3) verbindbar sind, daß das jeweilige Kraftmodul (15, 16) eine in die Abstützplatte (5) ein- und ausschraubbare Gewindestange (19) sowie ein mit der Gewindestange (19) axial verschiebbares, aber drehfreies Verbindungsteil (20) umfasst, welches sich senkrecht zur Längsachse (21) der Gewindestange (19) erstreckt, und daß an dem Verbindungsteil (20) ein sich parallel zur Gewindestange (19) erstreckendes stangenförmiges Führungselement (22) befestigt ist, welches einerseits in eine Führungsausnehmung (23) der Abstützplatte (5) verschiebbar eingreift und andererseits mit dem Endbereich des dem jeweiligen Kraftmodul (15, 16) zugeordneten elastischen Federarmes (17, 18) verbunden ist.

2. Orthodontische Vorrichtung nach Anspruch 1, **dadurch gekennzeichnet, daß** das stangenförmige Führungselement (22) aus Edelstahl und der elastische Federarm (17, 18) aus einer Titan-Molybdän-Legierung besteht.

3. Orthodontische Vorrichtung nach Anspruch 1 oder 2, **dadurch gekennzeichnet, daß** das stangenförmige Führungselement (22) als Rohr ausgebildet ist und daß der Endbereich des elastischen Federarmes (17, 18) in den rohrförmigen Innenraum ragt.

4. Orthodontische Vorrichtung nach Anspruch 3, **dadurch gekennzeichnet, daß** das stangenförmige Führungselement (22) mit dem elastischen Federarm (17, 18) kraftschlüssig mittels eines Klebstoffes und/oder mittels einer Preß- bzw. Klemmpassung miteinander verbunden ist.

5. Orthodontische Vorrichtung nach Anspruch 1, **dadurch gekennzeichnet, daß** der der Abstützplatte (5) zugewandte Endbereich des elastischen Federarmes (17, 18) derart ausgebildet ist, daß er selbst das stangenförmige Führungselement bildet.

6. Orthodontische Vorrichtung zur Distalisation von gegenüberliegenden Seitenzähnen (2, 3) des Oberkiefers eines Patienten, wobei die Vorrichtung (4) eine bei ihrer bestimmungsgemäßen Verwendung an dem Gaumen des Patienten anliegende Abstützplatte (5) aufweist, welche über seitlich an der Abstützplatte (5) angeordnete Drahtelemente (6-9) an gegenüberliegenden Zähnen (10-13) befestigbar ist, welche sich vor den zu distalisierenden Seitenzähnen (2, 3) befinden, und wobei mit der Abstützplatte (5) zwei seitlich voneinander beabstandete und voneinander unabhängig einstellbar Kraftmodule (15, 16) verbunden sind, welche jeweils mit einem der beiden zu distalisierenden Seitenzähne (2, 3) verbindbar sind, **dadurch gekennzeichnet, daß** die Kraftmodule (15, 16) auf der Rückseite (14) der Abstützplatte (5) angeordnet sind und über elastische Federarme (17, 18) mit den zu distalisierenden Seitenzähnen (2, 3) verbindbar sind, daß das jeweilige Kraftmodul (15, 16) eine in die Abstützplatte (5) ein- und ausschraubbare Gewindestange (19) sowie ein mit der Gewindestange (19) axial verschiebbares, aber drehfreies Verbindungsteil (20) umfasst, weiches sich senkrecht zur Längsachse (21) der Gewindestange (19) erstreckt, daß das Verbindungsteil (20) entlang eines sich parallel zur Gewindestange (19) erstreckenden stangenförmigen Führungselementes (22) verschiebbar angeordnet ist, welches mit der Abstützplatte (5) fest verbunden ist und daß das Verbindungsteil (20) mit dem der Abstützplatte (5) zugewandten Endbereich des dem Kraftmodul (15, 16) zugeordneten elastischen Federarmes (17, 18) verbunden ist.

7. C7rthodontische Vorrichtung zur Distalisation von gegenüberliegenden Seitenzähnen (2, 3) des Oberkiefers eines Patienten, wobei die Vorrichtung (4) eine bei ihrer bestimmungsgemäßen Verwendung an dem Gaumen des Patienten anliegende Abstützplatte (5) aufweist, welche über seitlich an der Abstützplatte (5) angeordnete Drahtelemente (6-9) an gegenüberliegenden Zähnen (10-13) befestigbar ist, welche sich vor den zu distalisierenden Seitenzähnen (2, 3) befinden, und wobei mit der Abstützplatte (5) zwei seitlich voneinander beabstandete und voneinander unabhängig einstellbar Kraftmodule (15, 16) verbunden sind, welche jeweils mit einem der beiden zu distalisierenden Seitenzähne (2, 3) verbindbar sind, **dadurch gekennzeichnet, daß** die Kraftmodule (15, 16) auf der Rückseite (14) der Abstützplatte (5) angeordnet sind und über elastische Federarme (17, 18) mit den zu distalisierenden Seitenzähnen (2, 3) verbindbar sind, daß das jeweilige Kraftmodul (15, 16) eine an der Abstützplatte (5) drehbar angeordnete Gewindespindel umfaßt, daß auf der Gewindespindel eine Spindelmutter angeordnet ist, an welcher das der Abstützplatte (5) zugewandte Ende des dem Kraftmodul (15, 16) zugeordneten elastischen Federarmes (17, 18) befestigt ist und daß die Spindelmutter entlang eines sich parallel zur Gewindespindel erstreckenden stangenförmigen Führungselementes (22) verschiebbar angeordnet ist, welches mit der Abstützplatte (5) fest verbunden ist.

## Claims

1. Orthodontic device for distalising opposing posterior teeth (2, 3) of the upper jaw of a patient, wherein the device (4) has a support plate (5), which rests on the palate of the patient during its intended use, said support plate being able to be fastened on opposing teeth (10 to 13) by means of wire elements (6 to 9) arranged laterally on the support plate (5), said teeth being located in front of the posterior teeth (2, 3) to be distalised, and wherein two force modules (15, 16), which are laterally spaced apart from one another and adjustable independently of one another, are connected to the support plate (5), said force modules being able to be connected in each case to one of the two posterior teeth (2, 3) to be distalised, **characterised in that** the force modules (15, 16) are arranged on the rear (14) of the support plate (5) and can be connected to the posterior teeth (2, 3) to be distalised by means of resilient spring arms (17, 18), **in that** the respective force module (15, 16) comprises a threaded rod (19), which can be screwed into the support plate (5) and unscrewed therefrom, as well as a connecting part (20), which is axially displaceable with the threaded rod (19) but rotation-free and which extends perpendicularly to the longitudinal axis (21) of the threaded rod (19), and **in that** a rod-like guide element (22) extending parallel to the threaded rod (19) is fastened on the connecting part (20), said guide element, on the one hand, displaceably engaging in a guide recess (23) of the support plate (5) and, on the other hand, being connected to the end region of the resilient spring arm (17, 18) assigned to the respective force module (15, 16).

2. Orthodontic device according to claim 1, **characterised in that** the rod-like guide element (22) consists of high-grade steel and the resilient spring arm (17, 18) consists of a titanium-molybdenum alloy.

3. Orthodontic device according to claim 1 or 2, **characterised in that** the rod-like guide element (22) is configured as a tube and **in that** the end region of the resilient spring arm (17, 18) projects into the tubular interior.

4. Orthodontic device according to claim 3, **characterised in that** the rod-like guide element (22) and the resilient spring arm (17, 18) are non-positively connected to one another by means of an adhesive and/or by means of a press or clamping fit.

5. Orthodontic device according to claim 1, **characterised in that** the end region of the resilient spring arm (17, 18) facing the support plate (5) is configured in such a way that it itself forms the rod-like guide element.

6. Orthodontic device for distalising opposing posterior teeth (2, 3) of the upper jaw of a patient, wherein the device (4) has a support plate (5), which rests on the palate of the patient during its intended use, said support plate being able to be fastened on opposing teeth (10 to 13) by means of wire elements (6 to 9) arranged laterally on the support plate (5), said teeth being located in front of the posterior teeth (2, 3) to be distalised, and wherein two force modules (15, 16), which are laterally spaced apart from one another and adjustable independently of one another, are connected to the support plate (5), said force modules being able to be connected in each case to one of the two posterior teeth (2, 3) to be distalised, **characterised in that** the force modules (15, 16) are arranged on the rear (14) of the support plate (5) and can be connected to the posterior teeth (2, 3) to be distalised by means of resilient spring arms (17, 18), **in that** the respective force module (15, 16) comprises a threaded rod (19), which can be screwed into the support plate (5) and unscrewed therefrom, as well as a connecting part (20), which is axially displaceable with the threaded rod (19) but rotation-free and which extends perpendicularly to the longitudinal axis (21) of the threaded rod (19), **in that** the connecting part (20) is displaceably arranged along a rod-like guide element (22), which extends parallel to the threaded rod (19) and which is rigidly connected to the support plate (5) and **in that** the connecting part (20) is connected to the end region, which faces the support plate (5), of the resilient spring arm (17, 18) assigned to the force module (15, 16).

7. Orthodontic device for distalising opposing posterior teeth (2, 3) of the upper jaw of a patient, wherein the device (4) has a support plate (5), which rests on the palate of the patient during its intended use, said support plate being able to be fastened on opposing teeth (10 to 13) by means of wire elements (6 to 9) arranged laterally on the support plate (5), said teeth being located in front of the posterior teeth (2, 3) to be distalised, and wherein two force modules (15, 16), which are laterally spaced apart from one another and adjustable independently of one another, are connected to the support plate (5), said force modules being able to be connected in each case to one of the two posterior teeth (2, 3) to be distalised, **characterised in that** the force modules (15, 16) are arranged on the rear (14) of the support plate (5) and can be connected to the posterior teeth (2, 3) to be distalised by means of resilient spring arms (17, 18), **in that** the respective force module (15, 16) comprises a threaded spindle rotatably arranged on the support plate (5), **in that** arranged on the threaded spindle is a spindle nut, fastened on which is the end, which faces the support plate (5), of the resilient spring arm (17,18) assigned to the force module (15, 16) and **in that** the spindle nut is displaceably arranged along a rod-like guide element (22) extending parallel to the threaded spindle, said guide element being rigidly connected to the support plate (5).

## Revendications

1. Dispositif orthodontique pour écarter des dents latérales (2, 3) opposées de la mâchoire supérieure d'un patient, le dispositif (4) présentant une plaque d'appui (5) se plaçant sur le palais du patient conformément à sa destination, laquelle peut être fixée aux dents opposées (10 - 13) via des éléments de fils (6 - 9) disposés latéralement au niveau de la plaque d'appui (5), lesquels se trouvent devant les dents latérales (2, 3) à écarter, et deux modules de force (15, 16), réglables indépendamment l'un de l'autre et écartés latéralement l'un de l'autre, étant liés à la plaque d'appui (5), lesquels peuvent être respectivement reliés à une des deux dents latérales (2, 3) à écarter, **caractérisé en ce que** les modules de force (15, 16) sont disposés sur le côté arrière (14) de la plaque d'appui (5) et peuvent être reliés par le biais de bras à ressort élastiques (17, 18) aux dents latérales (2, 3) à écarter, **en ce que** chaque module de force (15, 16) comprend une tige filetée (19) pouvant être vissée et dévissée dans la plaque d'appui (5), ainsi qu'un élément de liaison (20) déplaçable axialement avec la tige filetée (19) mais libre en rotation, lequel s'étend perpendiculairement à l'axe longitudinal (21) de la tige filetée (19) et **en ce qu'**au niveau de l'élément de liaison (20), est fixé un élément de guidage (22) en forme de tige s'étendant parallèlement à la tige filetée (19), lequel, d'une part, vient en prise de manière coulissable dans un évidement de guidage (23) de la plaque d'appui (5) et, d'autre part, est relié à la zone d'extrémité du bras à ressort élastique (17, 18) associé au module de force (15, 16) respectif.

2. Dispositif orthodontique selon la revendication 1, **caractérisé en ce que** l'élément de guidage (22) en forme de tige est en acier inoxydable et le bras à ressort élastique (17, 18) en alliage de titane molybdène.

3. Dispositif orthodontique selon la revendication 1 ou 2, **caractérisé en ce que** l'élément de guidage (22) en forme de tige est conçu en tant que tuyau, et **en ce que** la zone d'extrémité du bras à ressort élastique (17, 18) dépasse dans l'espace intérieur tubulaire.

4. Dispositif orthodontique selon la revendication 3, **caractérisé en ce que** l'élément de guidage (22) en forme de tige est relié au bras à ressort élastique (17, 18) par liaison de force au moyen d'une substance collante et/ou au moyen d'un ajustement par serrage ou par pression.

5. Dispositif orthodontique selon la revendication 1, **caractérisé en ce que** la zone d'extrémité, orientée vers la plaque d'appui (5), du bras à ressort élastique (17, 18) est conçue de telle sorte qu'elle forme elle-même l'élément de guidage en forme de tige.

6. Dispositif orthodontique pour écarter des dents latérales (2, 3) opposées de la mâchoire supérieure d'un patient, le dispositif (4) présentant une plaque d'appui (5) se plaçant sur le palais du patient conformément à sa destination, laquelle peut être fixée aux dents opposées (10 - 13) via des éléments de fils (6 - 9) disposés latéralement au niveau de la plaque d'appui (5), lesquels se trouvent devant les dents latérales (2, 3) à écarter, et deux modules de force (15, 16), réglables indépendamment l'un de l'autre et écartés latéralement l'un de l'autre, étant liés à la plaque d'appui (5), lesquels peuvent être respectivement reliés à une des deux dents latérales (2, 3) à écarter, **caractérisé en ce que** les modules de force (15, 16) sont disposés sur le côté arrière (14) de la plaque d'appui (5) et peuvent être reliés par le biais de bras à ressort élastiques (17, 18) aux dents latérales (2, 3) à écarter, **en ce que** chaque module de force (15, 16) comprend une tige filetée (19) pouvant être vissée et dévissée dans la plaque d'appui (5), ainsi qu'un élément de liaison (20) déplaçable axialement avec la tige filetée (19) mais libre en rotation, lequel s'étend perpendiculairement à l'axe longitudinal (21) de la tige filetée (19), **en ce que** l'élément de liaison (20) est disposé mobile le long d'un élément de guidage (22) en forme de tige s'étendant parallèlement à la tige filetée (19), lequel est relié fixement à la plaque d'appui (5) et **en ce que** l'élément de liaison (20) est relié à la zone d'extrémité, orientée vers la plaque d'appui (5), du bras à ressort élastique (17, 18) associé au module de force (15, 16).

7. Dispositif orthodontique pour écarter des dents latérales (2, 3) opposées de la mâchoire supérieure d'un patient, le dispositif (4) présentant une plaque d'appui (5) se plaçant sur le palais du patient conformément à sa destination, laquelle peut être fixée aux dents opposées (10 - 13) via des éléments de fils (6 - 9) disposés latéralement au niveau de la plaque d'appui (5), lesquels se trouvent devant les dents latérales (2, 3) à écarter et, deux modules de force (15, 16) réglables indépendamment l'un de l'autre, et écartés latéralement l'un de l'autre, étant liés à la plaque d'appui (5), lesquels peuvent être respectivement reliés à une des deux dents latérales (2, 3) à écarter, **caractérisé en ce que** les modules de force (15, 16) sont disposés sur le côté arrière (14) de la plaque d'appui (5) et peuvent être reliés par le biais de bras à ressort élastiques (17, 18) aux dents latérales (2, 3) à écarter, **en ce que** chaque module de force (15, 16) comprend une tige filetée disposée de manière rotative au niveau de la plaque d'appui (5), **en ce qu'**un écrou de broche est disposé sur la tige filetée, au niveau duquel est fixée l'extrémité, orientée vers la plaque d'appui (5), du bras à ressort élastique (17, 18) associé au module de force (15, 16) et **en ce que** l'écrou de broche est disposé mobile le long d'un élément de guidage (22) en forme de tige s'étendant parallèlement à la tige filetée (19), lequel est relié fixement à la plaque d'appui (5).
